(19) 

Europäisches
Patentamt
European
Patent Office
Office européen
des brevets

(11) **EP 3 617 953 A1**

(12) **EUROPEAN PATENT APPLICATION**

(43) Date of publication:
**04.03.2020 Bulletin 2020/10**

(51) Int Cl.:
*G06N 3/04* (2006.01)  *G06N 3/08* (2006.01)

(21) Application number: **18191736.0**

(22) Date of filing: **30.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventors:
- **GEBRE, Binyam Gebrekidan
  5656 AE Eindhoven (NL)**
- **TRAJANOVSKI, Stojan
  5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **AN ADAPTABLE NEURAL NETWORK**

(57)    A neural network system formed of two neural networks. One of the neural networks adjusts a structure of the other neural network based on information about a specific task, so that the other neural network is adapted to perform that specific task. Thus, an adaptable neural network system capable of performing different tasks on input data can be realized.

FIG. 1

**Description**

FIELD OF THE INVENTION

The present invention relates to the field of neural network systems, and in particular to neural network systems capable of performing multiple assessments on input data.

BACKGROUND OF THE INVENTION

Neural networks, such as those employing deep learning models, are increasingly used in data analysis tasks, such as image analysis and speech recognition.

Generally, a neural network is applied to input data to generate desired output information or data. A typical neural network operates by applying a numerical model, formed of a series of analysis steps, to input data to thereby generate or predict output data indicative of a result of a desired task. Each analysis step is commonly called a "layer" of the neural network.

By way of example, a neural network may process an x-ray image (i.e. input data) of a subject's chest to predict or identify whether the subject has a particular disease (the desired task), where the neural network provides output data predicting whether the subject has the particular disease or a probability that the subject has the particular disease.

A neural network is usually tuned to perform a specific task, i.e. trained to generate a specific output, using training data. This process involves collecting training data and applying a numerical model (e.g. formed of a plurality of different layers or analysis steps) to the training data to provide a desired output. Parameters of this numerical model are then modified based a comparison between the provided desired output and a known value for this desired output (i.e. obtained from the training data), in order to improve a performance of the numerical model. Such a neural network can then be applied to new input data to predict a desired output based on the new input data.

However, one problem of neural networks is that (once trained) a neural network is adapted for a specific task. This means that performing a plurality of tasks or assessments of the input data requires the creation of multiple neural networks. This disadvantageously requires a large amount of processing power and/or storage for each neural network.

Of course, multi-task neural networks, i.e. networks capable of providing more than one output, are known in the art. Typically, such networks operate by performing a first set of analysis steps or layers on input data to generate initially processed input data, before performing separate task-specific analysis steps or layers on the initially processed input data for each desired task. However, such methods suffer from a lack of personalization for each task - as the initial layers are shared between tasks, and can therefore be less accurate than dedicated task-specific neural networks.

There is therefore a desire to provide a neural network system that can provide highly bespoke and task-specific analysis of input data, without requiring the use of a plurality of neural networks.

SUMMARY OF THE INVENTION

The invention is defined by the claims.

According to examples in accordance with an aspect of the invention, there is provided an adaptable neural network system for processing first input data. The neural network system comprises a first neural network formed of a plurality of sequential layers, wherein the first neural network is adapted to generate output data by processing first input data using the plurality of sequential layers; a second neural network adapted to generate at least one task-specific parameter for the plurality of sequential layers of the first neural network based on second input data indicative of a desired task to be performed on the first input data; and a neural network modifier adapted to modify the first neural network based on the at least one task-specific parameter generated by the second neural network, to thereby adapt to first neural network to the desired task.

Thus, a first neural network (i.e. an actor) is adapted for different tasks by a second neural network (i.e. a generator). In particular, the second neural network is adapted to modify or weigh parameters of different layers of the first neural network in order to tune the first neural network to a specific task. Thus, the second neural network defines the task or prediction performed by the first neural network. In this way, only two neural networks need to be used to provide a highly personalized and task-adaptable neural network system.

The goal of the second neural network is to produce, in the first neural network, a network architecture with parameters (e.g. weight/bias values) specialized to provide the best possible performance for a given task (e.g. given particular conditions and/or distributions of the input data). The goal of the first neural network is to use the weight values generated by the second neural network to perform a particular task (i.e. to make predictions). To achieve these goals, the layers of the first neural network are adapted by the second neural network to specialize the first neural network to a particular task.

Embodiments of the present invention thereby avoid the need for multiple task-specific neural networks to be generated, whilst also allowing there to be a high degree of personalization for each task - providing a neural network system having a high performance. This proposed network system architecture also provides more dynamic flexibility to the processing of input data.

The second input data may be indicative of a desired task to be performed by the first neural network, such as defining the desired prediction of the first neural network. In other words, the second input data indicates a desired prediction task of the first neural network, so as to define the type of output data.

In at least one embodiment, the second neural network is adapted to generate the at least one task-specific parameter further based on third input data that provides information on the first input data. In other words, the parameters the first neural network may depend upon information of the first input data, such as metadata. The third input data may thereby provide background information associated with the first input data. This advantageously allows the first neural network to be personalized to the specific first input data under investigation, thereby improving an accuracy of the neural network system.

Preferably, the second input data comprises an input query for the adaptable neural network system, indicative of a desired task to be performed.

Thus, the neural network system may act to perform a user-specified task, e.g. as specified in an input query. This may be used, for example, to provide a useful tool for a clinician to check their hypotheses about a subject/patient.

The input query may comprise a hypothesized property associated with the first input data, and the first neural network is adapted to determine a value indicating whether the hypothesized property is correct. The neural network system may thereby act as a hypothesis tester, for determining whether a hypothesis provided as input to the second neural network is correct, by using the hypothesis to adapt the first neural network appropriately. The first neural network may, for example, be adapted to provide a probability indicating a likelihood that the hypothesized property is correct. In other embodiments, the first neural network may be adapted to output a value indicating a confirmation or rejection of the hypothesized property (e.g. a result of a one or two tailed test).

In some examples, the neural network system comprises a text processing unit adapt to process text of the first input data for provision to the second neural network. In particular, the text processing unit may extract features of an allowable dimension (i.e. of a particular size) for processing by the second neural network.

Preferably, the plurality of sequential layers of the first neural network comprises a predetermined number of adjustable parameters, and the second neural network is adapted to generate a task-specific parameter for each of the predetermined number of adjustable parameters.

This allows the second neural network to change to architecture and/or structure of the first neural network, e.g. by setting certain parameters to 0 or a null value. This effectively allows the overall architecture of the first neural network to be controlled by the second neural network. This thereby enables and improves a control of the first neural network by the second neural network, and leads to the generation of a more appropriate first neural network for performing a desired task.

The second neural network may comprise a plurality of sequential layers, where the at least one task-specific parameter is output by a sequentially last of the plurality of sequential layers. Thus, in some embodiments, the two neural networks may be provided as separate 'black boxes'.

Of course, in some embodiments, a portion of the at least one task-specific parameter may be output by layers earlier in the plurality of sequential layers, and a different portion may be output by a sequentially last of the plurality of sequential layers. That is, at least some of the at least one task-specific parameter is output by a sequentially last of the plurality of sequential layers. It should be understood that the second neural network may be designed to only provide task-specific parameters for the first neural network (i.e. and not to provide any other outputs).

Preferably, the first neural network is unable to change parameters of the second neural network (i.e. the second neural network is independent of the first neural network). Of course, it will be appreciated that the first neural network may define the maximum number of parameters, such as weights or biases, it can receive from the second neural network (i.e. help define an initial structure of the second neural network).

The first input data may comprise clinical/medical information of a subject and the second input data may comprise a hypothesized diagnosis or symptom of the subject. For example, the first input data may comprise a medical image of the subject. Optionally, the second neural network is further adapted to generate the at least one task-specific parameter based on metadata (e.g. subject information) associated with the medical image of the subject.

It has been recognized that embodiments of the present invention are especially useful in the context of analyzing medical information, as such information typically comprises complex and not fully understood data, which may be advantageously and automatically recognized by a neural network system.

According to examples in accordance with an aspect of the invention, there is also provided a method of processing first input data using an adaptable neural network system comprising a first neural network formed of a plurality of sequential layers. The method comprises: generating, using a second neural network, at least one task-specific parameter for the plurality of sequential layers of a first neural network based on second input data indicative of a desired task to be performed on the first input data; modifying the first neural network based on the at least one task-specific parameter, to thereby adapt to first neural network to the desired task; and generating output data by processing the first input data using the modified first neural network.

The step of generating at least one task-specific parameter preferably comprises generating the at least one task-specific parameter further based on third input data that provides information on the first input data.

Optionally, the second input data comprises an input query for the adaptable neural network system, indicative of a desired task to be performed.

In at least one embodiment, the plurality of sequential layers of the first neural network comprises a predetermined number of adjustable parameters, and the at least one task-specific parameter comprises a task-specific parameter for each of the predetermined number of adjustable parameters.

The second neural network may comprise a plurality of sequential layers, and the at least one task-specific parameter is output by a sequentially last of the plurality of sequential layers.

According to examples in accordance with another aspect of the invention, there is provided a computer program comprising code means for implementing any above-described method when said program is run on a computer.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 illustrates a neural network system according to an embodiment of the invention;
Figure 2 illustrates a first neural network for a neural network system according to an embodiment;
Figure 3 illustrates a second neural network for a neural network system according to an embodiment; and
Figure 4 illustrates a method of processing first input data according to an embodiment of the invention.

DETAILED DESCRIPTION OF THE EMBODIMENTS

Embodiments of the invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

According to a concept of the invention, there is proposed a neural network system formed of two neural networks. One of the neural networks adjusts a structure of the other neural network based on information about a specific task, so that the other neural network is adapted to perform that specific task. Thus, an adaptable neural network system capable of performing different tasks on input data can be realized.

Embodiments are at least partly based on the realization that a generic neural network can be adapted for specific tasks by adjusting parameters, e.g. weights and/or biases , of layers of the generic neural network, and that these parameters can be generated by a second neural network. Thus, a second neural network can process information about a desired task in order to adapt a generic (i.e. first) neural network to perform the desired task.

Illustrative embodiments may be employed in an assistance tool for a diagnostic system, for example, where medical images are processed using the neural network system to predict or identify the presence of different medical conditions or diagnoses.

In the context of the present invention, a "layer" refers to a processing or analysis step of a neural network or numerical model used to process input data. The output of any given layer may be referred to as a "feature map", as is known in the art. The skilled person will appreciate that the term "task-specific parameter" may refer to a weight and/or bias of a layer of a neural network.

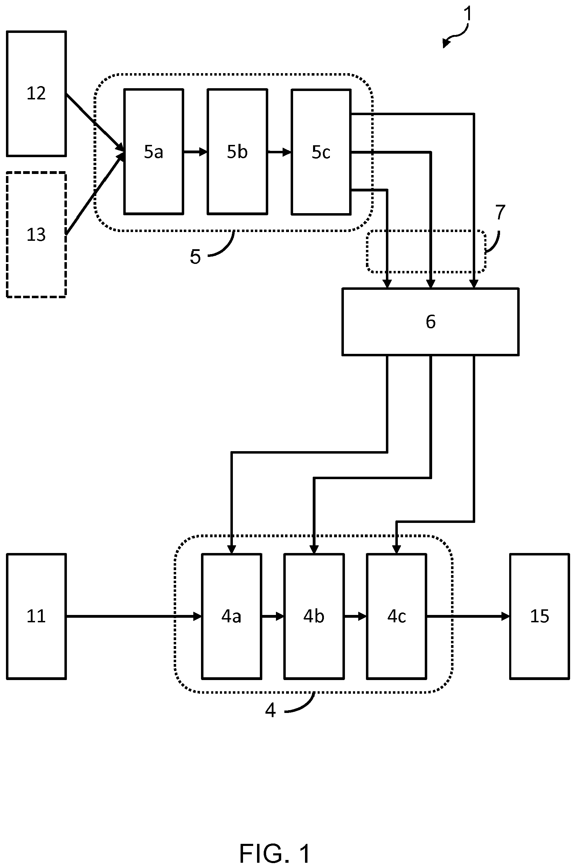

Figure 1 illustrates the architecture of an adaptable neural network system 1 according to an embodiment of the invention. In general, the neural network system 1 is adapted to process first input data 11 to generate output data 15.

The neural network system 1 comprises a first neural network 4 that processes the first input data 11 to generate the output data 15. The first neural network 4 comprises a sequential series of layers 4a-4c, each of which are sequentially applied to the input data 11, the output of each previous layer providing the input to the subsequent layer.

Each layer 4a-4c of the first neural network 4 may have one or more parameters that can be modified to thereby adapt the first neural network 4 to performing a specific task. For example, where each layer represents an algorithm or processing step applied to an output of a previous layer, each processing step may comprise different one or more parameters within said processing step.

A second neural network 5 generates one or more task-specific parameters 7 for the plurality of sequential layers 4a-4c of the first neural network 4. In particular, the second neural network 5 processes second input data 12, indicative of a desired task to be performed on the first input data 11, to generate the task-specific parameter 7.

The second neural network 5 may, for example, comprise a plurality of sequential layers 5a-5c adapted to generate the task-specific parameter 7 for modifying or tailoring the (layers 4a-4c of the) first neural network 4 to perform the desired task indicated by the second input data 12. Thus, the one or more task-specific weight and/or bias 7 can be output by a sequentially last one of the plurality of sequential layers 5a-5c.

In this way, the second neural network 5 generates parameters, e.g. weights or values, used to adapt the plurality of sequential layers 4a-4c of the first neural network 4 to a specific task. The specific or desired task is identified/defined by the second input data 12, which may comprise an input enquiry indicative of a desired task to be performed on the first input data 11 (e.g. prediction of presence/absence of a particular parameter using the first input data 11).

By way of example, the values generated by the second neural network 5 may be used to adjust or modify one or more parameters of at least one layer 4a-4c of the first neural network 4. In some examples, the second neural network 5 is adapted to generate a modifying value for each parameter of each layer 4a-4c of the first neural network 4, such as a value for a weight or bias of a layer of the first neural network 4.

Thus, the arrows of Figure 1 illustrating the parameters 7 may each represent at least one weight, bias or other modifying value for a respective layer of the first neural network 4.

A neural network modifier 6 is provided to modify the first neural network 4 using the task-specific parameters generated by the second neural network 5. By way of example, the neural network modifier may modify one or more parameters of one or more layers 4a-4c of the first neural network 4.

In this way, the first neural network 4 can be adapted by the neural network modifier 6, based on parameters generated by the second neural network 5, to perform the desired task, such as prediction of the presence/absence of a particular parameter.

By way of example, the neural network modifier 6 may appropriately weight (i.e. change a value of) or otherwise modify at least one parameter of each layer 4a-4c of the first neural network 4 based on a parameter generated by the second neural network 5.

Preferably, the first input data 11 comprises clinical/medical information of a subject/patient (e.g. an X-ray image or ECG trace) and the second input data 12 comprises an inquiry for confirming or rejecting the presence of a particular sign/symptom/diagnosis or a hypothesis of the presence of the particular sign/symptom/diagnosis. Thus, the first input data 11 may comprise clinical/medical information of a subject and the second input data 12 may comprise a hypothesized diagnosis or sign/symptom of the subject.

For example, the first input data 11 may comprise a X-ray image of a subject bone, and the second input data 12 may comprise an enquiry as to, amongst other examples: whether the subject has a broken bone; whether the subject has Osteochondroma; or whether the subject has subacromial impingement. The first neural network 4 is adapted by the second neural network 5 to address the task indicated by the second input data 12 (e.g. to determine whether the subject has broken a bone or not).

As another explanative example, the first input data 11 may comprise a medical image (e.g. X-ray image or CT scan) of a subject and the second input data 12 may comprise an enquiry as to whether the medical image depicts tumors. In this example, the second neural network 5 generates parameters for modifying the first neural network 4 so that, when the modified first neural network 4 processes the first input data 11, the modified first neural network 4 predicts whether the medical image depicts tumors. Thus, the output data 15 provides an indication of whether the medical image (i.e. the first input data 11) depicts tumors.

By way of another explanative example, the first input data 11 may comprise information of an ECG trace of a subject and the second input data 12 may comprise an enquiry as to whether (or a hypothesis that) the subject has one of: tachycardia, suffered from a heart attack, suffers from hyperkalemia, atrial fibrillation and so on. The second neural network 5 can adapt or modify the first neural network 4 so that the first neural network 4 processes the ECG trace to establish an answer to the enquiry of the second input data 12 (e.g. "does the subject suffers from hyperkalemia?") or to confirm or reject a hypothesis provided by the second input data 12 (e.g. "the subject suffers from hyperkalemia"), or to provide a probability that the same is true.

The output data 15 preferably indicates a confirmation or rejection of a hypothesis indicated by the second input data 12 or a probability value indicating a likelihood that the hypothesis is true. In other words, the role of the first neural network 4 can be to confirm or reject, or provide a probability value for, a generic hypothesis - where the first neural network 4 is then adapted for a specific hypothesis by the second neural network 5.

The hypothesis provided by the second input data 12 thereby indicates the task to be performed (i.e. to reject or not reject the hypothesis specified by the second input data 12).

Examples of a hypothesis for an X-ray image of a subject's chest include: pneumonia present; tumors present;

calcinosis present; fluid in lungs and so on.

Thus, the second input data 12 may define a confirmation/rejection task or a probability determination task to be performed by the first neural network 4. Accordingly, the second neural network 5 may be adapted to tailor the first neural network 4 to predict a likelihood that a hypothesis (defined by the second input data 12) is correct or to confirm/reject the hypothesis - e.g. according to a statistical assessment or if a likelihood if greater than a predetermined percentage.

The first neural network 4 may output a binary result, indicating confirmation or rejection of a hypothesis (e.g. presence or absence of tumors), or output a percentage likelihood of a hypothesis being correct (e.g. 80% chance of tumors being present).

In other examples, the neural network system 1 is adapted to provide diagnostic information as the output data, where the first 11 and second 12 input data are medical data such as medical images or reports.

By way of example, the first input data 11 may comprise a medical image and the second input data 12 may comprise a medical report. The medical report may be processed to identify disease names or symptoms, which are provided as the second input data 12.

The second neural network 5 may then adapt the first neural network 4 to generate a predicted final diagnosis based on the medical image, where the prediction process (i.e. the first neural network) is adapted based on the information provided in the medical report. Such products are of particular use in training clinicians or other members of staff, e.g. as to the relationship between a medical image and a medical report.

A recurrent neural network (such as a long short-term memory based network) could be used to convert free text (i.e. structure-less text) into a structured input query that acts as the second input data 12. This, for example, avoids the need for manual extraction of labels in a medical report.

In further embodiments, the second neural network 5 is adapted to generate the parameters 7 further based on third input data 13, the third input data providing information about the first input data 11.

By way of example, where the first input data 11 comprises a medical image of a subject, the third input data 13 may comprise metadata (of the image) - such as image capturing methodology (e.g. X-ray or CT scan), exposure time, location, view and so on - or subject-specific information - such as age, gender, diagnosis information, symptom information and so on.

Such embodiments enable the first neural network 4 to be tailored or personalized to the first input data 11, thereby improving a prediction accuracy of the neural network system in performing the specific task identified by the second input data 12.

It has been recognized that information provided by the third input data 13 can have an influence on the (actual) result of the desired task as indicated by the second input data 12. Thus, the third input data 13 may be used by the second neural network 5 to appropriately modify the first neural network 4 to reflect this influence of the third input data.

For example, the presence of a first disease in a subject can make the presence of another disease more/less likely. Thus, if the second input data 12 indicates a desired task of determining whether a first disease is present (e.g. and the first input data 11 provides an X-ray image of a subject) and the third input data indicates the presence of a second disease that is known to increase the likelihood of the first disease being present, the second neural network 5 may modify the first neural network 4 so that the first neural network 4 is more likely to determine that the first disease is present.

This increases an accuracy of the prediction or task performed by the neural network system 1. Put another way, the proposed neural network system enables a dependency between third input data and output data to be taken into account.

The values of the any of the first 11, second 12 or (optional) third 13 input data be binary, categorical or continuous.

Each of the first and second neural network 5s may comprise a neural network with convolutional or fully connected layers. The output of each network (i.e. the parameters 7 and the output data 15) is a continuous function of its input values - meaning that the two neural networks can be trained using standard stochastic gradient descent methodologies - where the gradient information is obtained from a standard backpropagation algorithm.

The first 4 and second 5 neural networks may be formed according to any known network architecture. However, the "DenseNet" architecture is particularly suitable for use as the first neural network 4, as it uses very few filters per layer - enabling the second neural network 5 to be efficient.

In particular, every layer of the DenseNet architecture uses feature-maps (i.e. outputs) of all preceding layers as inputs. Thus, because features are re-used, DenseNets require far fewer parameters than competing network architectures to achieve an equal or better performance. In other words, the second neural network 5 is required to generate fewer parameters than for other neural networks known in the art, and therefore provides a more efficient neural network system.

A full explanation of the "DenseNet" architecture, suitable for use as a neural network in some embodiments of the present invention, is set out in Huang, G., Liu, Z., Weinberger, K.Q. and van der Maaten, L., 2017, July. Densely connected convolutional networks. In Proceedings of the IEEE conference on computer vision and pattern recognition (Vol. 1, No. 2, p. 3).

The design of the second neural network 5 may depend upon the design of the first neural network 4. In particular, the second neural network 5 may be designed so that the number of parameters 7 provided by the second neural network 5 matches the maximum possible number of parameters of the first neural network 4.

This may, for example, be performed by summing all paramaters in all of the layers 4a-4c of the first neural network 4. The number of parameters $N_L$ in a single convolutional layer may, for example, be determined using the following formula:

$$N_L = N_i * N_o * k_x * k_y + n_b \tag{1}$$

where $N_i$ is equal to the number of input channels to the layer, $N_o$ is equal to the number of output channels from the layer, $k_x$ is the kernel size in an x-direction, $k_y$ is the kernel size in a y-direction and $n_b$ is a number of biases or bias units in the layer, which is equal to the total number of output channels No. The total number of parameters $N_L$ in each layer may be summed (i.e. the overall number of paramters in the first neural network 4 can be generated).

The skilled person will appreciate that different types of layers may use different formulas (i.e. to that presented in equation (1)) to calculate a number of parameters for modification by the second neural network. For example, long short-term memory, fully connected and/or seperable convolution layers will be differently structured to a convolutional layer, and therefore may required different methods for calculating a number of parameters $N_L$ contained therein.

It has been recognised that, for the second neural network 5, a few layers (i.e. <10 consecutive layers) of convolutional and/or fully connected layers are usually enough to generate suitable parameters for the first neural network 4, under the constraint the second input data 12 matches the expected input dimension of the application, and that number of parameters 7 output by the second neural network match the number of parameters present in the first neural network 4.

Of course, the values of one or more of the parameters produced by the second neural network 5 could be 0. In this way, the second neural network 5 can control the topology of the first neural network 4 (i.e. by excluding some weights, biases, variables or parameters from a layer or processing step 4a-4c of the first neural network 4). This improves a level of control that the second neural network 5 has over the first neural network 4, thereby improving an adaptability of the neural network system 1.

In other words, the second neural network 5 may be adapted to control a topology or architecture of the first neural network 4, by enabling the second neural network 5 to set one or more parameters (and therefore variables) of the first neural network 4 to zero (0) or null values.

Thus, a neural network system 1 that can self-adapt to a desired task is presented. In particular, the neural network system 1 enables interactive hypothesis generation and testing, by enabling a clinician or other user to input a hypothesis (via the second input data 12 or query) about first input data 11 which can be tested.

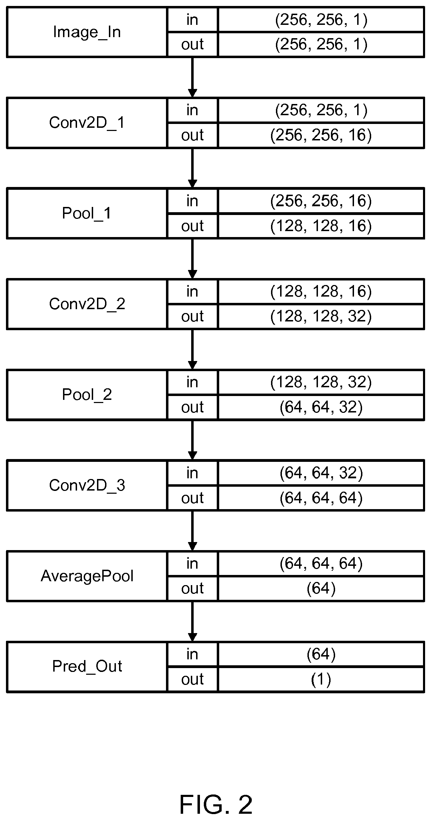

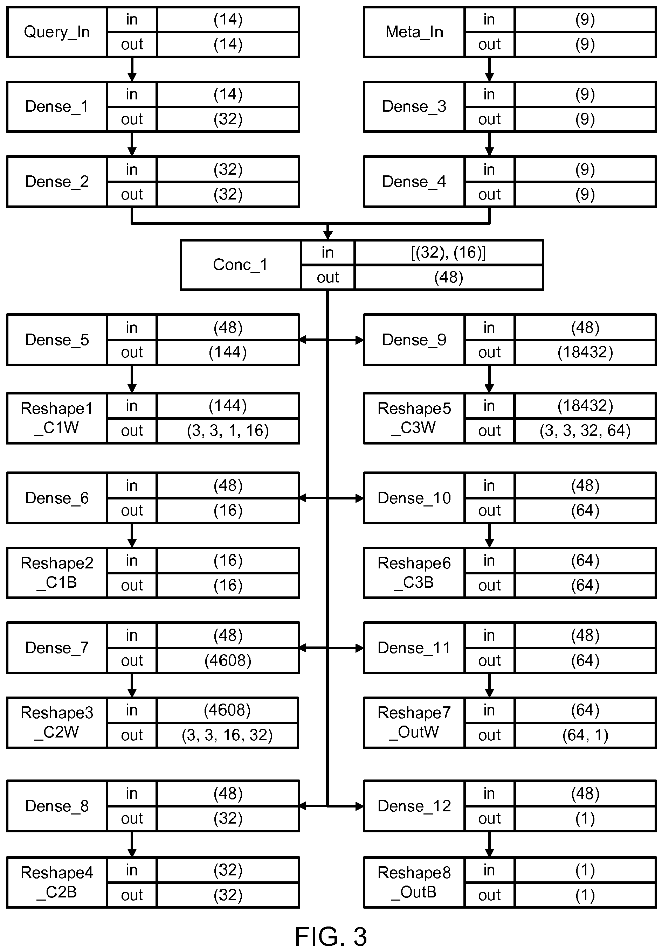

To provide a contextual example, Figures 2 and 3 respectively illustrate a first network and a corresponding second network according to an embodiment of the invention.

In each Figure, different layers of the networks are illustrated, together with the input shape "in" and output shape "out" of each respective layer. It will be well appreciated by the skilled person that an 'input shape' refers to the data structure or data format (i.e. vector/matrix/tensor structure/size) that is received by a given layer of the neural network and an 'output shape' refers to the data structure or data output (i.e. vector/matrix/tensor structure/size) provided by the given layer of the neural network (i.e. to be received by a subsequent layer).

Referring first to Figure 2, the first network comprises a series of layers adapted to process first input data to thereby generate output data. Here, the first input data comprises a grayscale (single channel) 256 x 256 image, and the output data is a single value representative of the probability that a particular hypothesis is true. Thus, the data structure or format associated with the input data is (256, 256, 1) and the data structure or format of the output data is (1).

Each layer of the first network is adapted to perform a particular task on an output of a previous layer.

An input layer Image_In receives pixel values of the 256 x 256 image (i.e. the first input data). As it is an input layer, the output of the input layer has a shape (256, 256, 1). In some examples, the input layer may be a normalization layer.

A two-dimensional convolutional layer Conv2D_1, Conv2D_2, Conv2D_3 performs a convolution operation on the output of a preceding layer. Convolutional processes will be well known to the skilled person. In the illustrated scenario, each convolutional layer performs a convolutional process using a 2D filter kernel having a size 3x3, with a stride 1 and with zero padding (i.e. zeros are added to the edges of the input matrix so that the output of the convolution is a same size as the input, a known concept in the art). The number of zero rows/columns to add to the edge of the input is dependent on the filter size, for the 3x3 filter, the pad size is 1.

Pooling layers Pool_1, Pool_2, Pool_3 perform a pooling operation on the output of a preceding layer. Here, the pooling layers perform a maximum pooling process on the output of the preceding layer. In the illustrated scenario, the pooling layers perform a 2x2 maximum pool, having stride 2.

A different pooling layer, AveragePool, performs an average pooling process on the output of the preceding layer.

The output layer Pred Out is a dense or fully connected layer that performs a linear operation on the output of the preceding layer. This can be followed by a sigmoid activation function to generate a single output value representative of the probability that a particular hypothesis is true (i.e. the output data). The number of weights in a dense or fully connected layers is equal to the number of input channels $N_i$ multiplied by the number of output channels $N_o$. The number of biases is equal to the number of output channels $N_O$.

The first network comprises a series of sequence of these above layers that are sequentially applied to the input data to thereby generate the output layer. In the illustrated example, the output of the input layer is processed using three convolutional-pooling layer pairs, before the output layer generates the output data.

Table 1 illustrates, for each Layer (Layer Name), a data structure for weights (Weights) and biases (Biases). Table 1 also illustrates a corresponding number of parameters associated with each Layer (e.g. as calculated using equation (1)).

Thus, for a convolutional layer having a weight structure of (3, 3, 1, 16) and a bias structure of (16), the total number of parameters is 160.

In this example, the weight structure represents $(k_x, k_y, N_i, N_o)$. As before, $N_i$ is equal to the number of input channels to the layer, $N_o$ is equal to the number of output channels from the layer, $k_x$ is the kernel size in an x-direction, $k_y$ is the kernel size in a y-direction. The bias structure represents $(n_b)$, where $n_b$ is the number of biases, which is the same as the number of output channels $N_o$.

For the sake of improved clarity, Table 1 also illustrates the shapes or data structures received as input (Input Shape) and provided as output (Output Shape) for each layer. It will be well understood by the skilled person that an input shape indicates the data structure received by a neural network layer, and the output shape indicates the data structure output by the neural network layer.

Pooling layers do not require weights and/or biases (i.e. parameters), due to the nature of the pooling operation. Similarly, input layers do not require weights and/or biases, and therefore are not associated with any parameters.

Table 1

| Layer Name | Weights | Biases | Input Shape | Output Shape | No. of Parameters |
|---|---|---|---|---|---|
| Image In | --- | --- | (256,256, 1) | (256,256, 1) | 0 |
| Conv2D_1 | (3,3,1,16) | (16) | (256,256,1) | (256,256,16) | 160 |
| Pool_1 | --- | --- | (256, 256, 16) | (128, 128, 16) | 0 |
| Conv2D_2 | (3, 3, 16, 32) | (32) | (128, 128, 16) | (128, 128, 32) | 4640 |
| Pool_2 | --- | --- | (128, 128,32) | (64,64,32) | 0 |
| Conv2D_3 | (3, 3, 32, 64) | (64) | (64,64,32) | (64,64,64) | 18496 |
| AveragePool | --- | --- | (64,64,64) | (64) | 0 |
| Pred_Out | (64,1) | (1) | (64) | (1) | 65 |

The second neural network aims to generate task-specific weights and/or biases (i.e. parameters) for the relevant layers of the first neural network. Thus, the second neural network is adapted to adapt the first neural network to perform a particular task or predict a particular outcome.

In the illustrated scenario (as set out in Table 1), the second neural network must therefore generate eight different parameter outputs of varying data structures, to provide a total of 23,361 parameters. Thus, weights and biases for each of the convolutional layers Conv2D_1, Conv2D_2, Conv2D_3 and the output layer Pred Out should be generated.

Figure 3 illustrates a second neural network suitable for generating task-specific weights and/or biases for the first neural network of Figure 2.

The second neural network of Figure 3 comprises two input layers Query_In and Meta In.

A query input layer Query_In receives second input data indicative of a desired task to be performed on the first input data. For example, the second input data may comprise an input query for the adaptable neural network system, indicative of a desired task to be performed. The size of the second input data may be preset (e.g. having size 14). In particular examples, a recurrent neural network (such as a long short-term memory based network) converts free text (i.e. structure-less text) into a structured input query that acts as the second input data for the query input layer Query_In.

A metadata input layer Meta In receives third input data that provides information on the first input data. In other words, the metadata input layer receives metadata providing information on the first input data.

Dense layers Dense_3, Dense_4, Dense_5, Dense_6, Dense_7, Dense_8, Dense_9, Dense_10, Dense_11, Dense_12 each perform a linear operation on the output of the preceding layer to generate an output. The operation of a dense layer would be well known to the skilled person.

A concatenation layer Conc_1 concatenates outputs of a plurality of layers (i.e. two or more data structures) to form a single output (i.e. a single data structure). The operation of a concatenation layer would also be well known to the skilled person.

Reshape layers Reshape1_C1W, Reshape2_C1B, Reshape_C2W, Reshape4_C2B, Reshape5_C3W, Reshape6_C3B, Reshape7_OutW, Reshape8_OutB reshape or reform the output shape of the previous layer to form a reshaped output, having the same values in a different data structure.

In the illustrated example, the second network takes two input types, second input data, having a 14 dimensional vector and third input data, having a 9 dimensional vector. Each input is initially separately processed by respective subnetworks (i.e. first subnetwork: Dense_1, Dense_2; and second subnetwork: Dense_3, Dense_4). Deeper in the neural network, their outputs are concatenated with the concatenation layer Conc_1. The concatenation may instead, in some examples, occur directly after the input layers for each input type (e.g. to concatenate the vectors at the input layer to make an input vector of 23). The concatenated output vector of the subnetworks of the second network then serve as input for calculating weights and biases for the first network.

In some examples, each dense layer of the first subnetwork Dense_1, Dense_2, and the second subnetwork Dense_3 and Dense_4 is followed by a non-linear activation layer or is processed using a non-linear activation function, such as a ReLU layer. However, each subnetwork can be formed of only two dense layers if the dense layers have non-linearity like a ReLU layer.

The output of the concatenation layer Conc_1 serves as an input for each of a plurality of different further subnetworks, each further subnetwork generating the weight(s) or bias(es) for a layer of the first neural network.

Each further subnetwork here comprises a dense layer (e.g. Dense_5) and a reshape layer (e.g. Reshape1_C1W).

A first set of subnetworks generates weights for each respective layer of the first neural network (that require weights), and a second set of subnetworks generate biases for each respective layer of the first neural network (that require weights).

Here, the reshape layers are used as output layers for the second neural network. In particular, the reshape layers reshape a data structure into a format for providing weights or biases for a layer of the first neural network. The output of each reshape layer is a data structure respectively providing weights and/or biases for each layer of the first neural network requiring weight and/or biases.

Referring back to Figure 2, the first network has a total of eight layers, of which only four have any associated parameters, namely: Conv2D_1, Conv2D_3, Conv2D_3, and Pred_Out. To provide weights and biases for each of these layers, the second neural network of Figure 3 provides four outputs (to provide weights and biases of each of the four layers). Each output has a data structure appropriate for providing respective weights or biases for a particular layer of the first neural network.

In Figure 3, the suffix W indicates weights, and the suffix B indicates biases. The suffix C1 refers to the convolutional layer Conv2D_1, the suffix C2 refers to the convolutional layer Conv2D_2, the suffix C3 refers to the convolutional layer Conv2D_3 and the suffix Out refers to the output layer Pred Out of the first neural network of Figure 1.

Reshape1_C1W provides weights (indicated by suffix W) for the convolutional layer Conv2D_1 (i.e. "C1") of the first neural network. Reshape2_C1B provides biases (indicated by suffix B) for the convolutional layer Conv2D_1 (i.e. "C1") of the first neural network.

Reshape3_C2W provides weights (indicated by suffix W) for the convolutional layer Conv2D_2 (i.e. "C2") of the first neural network. Reshape4_C2B provides biases (indicated by suffix B) for the convolutional layer Conv2D_2 (i.e. "C2") of the first neural network.

Reshape5_C3W provides weights (indicated by suffix W) for the convolutional layer Conv2D_3 (i.e. "C3") of the first neural network. Reshape6_C3B provides biases (indicated by suffix B) for the convolutional layer Conv2D_3 (i.e. "C3") of the first neural network.

Reshape7_OutW provides weights (indicated by suffix W) for the output layer Pred Out (i.e. "Out") of the first neural network. Reshape8_OutB provides biases (indicated by suffix B) for the output layer Pred Out (i.e. "Out") of the first neural network.

The weights and biases (i.e. parameters) generated by the second neural network are provided as weights and biases for the relevant layers of the first neural network. The first network 4 can use the new weights and biases to make predictions on given first input data.

In this way, second input data (representing a desired task) and third input data (representing metadata of the first input data) can influence the processing of the first input data. This allows the first neural network to be adapted to perform a task or predict an output based on at least a desired task (indicated by the second input data).

In particular, the second neural network is adapted to receive the second input data, indicative of a desired task to be performed by the first neural network, and generate weights and biases for the first neural network.

The second neural network may be trained according to any known neural network training mechanism, for example, using gradient descent based training systems or genetic algorithms.

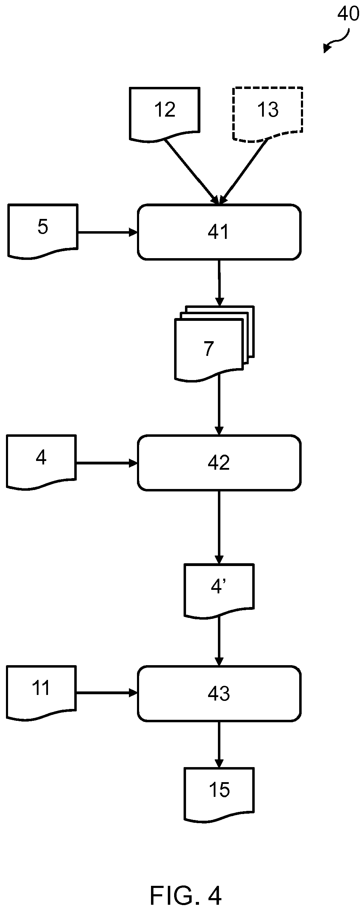

Figure 4 illustrates a method 40 according to an embodiment of the invention. The method processes first input data 11 using an adaptable neural network system comprising a first neural network 4, such as those previously described.

The method comprises a step 41 of generating, using a second neural network 5, at least one task-specific parameter 7 for the first neural network 4. In particular, step 41 generates at least one task-specific parameter 7 based on second input data 12 indicative of a desired task to be performed on the first input data (such as a prediction task).

The method 40 also comprises a step 42 of modifying the first neural network 4 based on the at least one task-specific parameter 7. Thus, step 42 adapts the first neural network 4 to the desired task, so that the modified first neural network 4' is tailored to a desired task (indicated by the second input data 12).

The method 40 then performs a step 43 of generating output data 15 by processing the first input data 11 using the modified first neural network 4'. Thus, the personalized or adapted neural network 4' generates output data 15.

The method enables a neural network system to be adapted for performing a specific task by modifying a first neural network 4 based on second input data 12 indicative of the specific task. The second input data 12 is processed by a second neural network 5 to generate parameters 7 or modifying values that are used to modify the first neural network to perform a specific task.

In some embodiments, the step 41 comprises generating the at least one task-specific parameter 7 further based on third input data 13 that provides information on the first input data 11. Thus, both second input data 12 and third input data 13 may be used to generate the task-specific parameter(s) for modifying the first neural network 4.

Some embodiments of the present invention may be a system, a method, and/or a computer program product. The computer program product may include a computer readable storage medium (or media) having computer readable program instructions thereon for causing a processor to carry out aspects of the present invention. The computer readable storage medium can therefore be a tangible device that can retain and store instructions for use by an instruction execution device, such as a controller, processor or processing system, for executing a method according to the present invention.

Some embodiments of the present invention are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s).

In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

**1.** An adaptable neural network system (1) for processing first input data (11), the neural network system (1) comprising:

a first neural network (4) formed of a plurality of sequential layers (4a, 4b, 4c), wherein the first neural network is adapted to generate output data (15) by processing first input data (11) using the plurality of sequential layers;
a second neural network (5) adapted to generate at least one task-specific parameter (7) for the plurality of sequential layers (4a, 4b, 4c) of the first neural network (4) based on second input data (12) indicative of a desired task to be performed on the first input data (11); and

a neural network modifier (6) adapted to modify the first neural network (4) based on the at least one task-specific parameter (7) generated by the second neural network (5), to thereby adapt the first neural network (4) to the desired task.

2. The adaptable neural network system (1) of claim 1, wherein the second neural network (5) is adapted to generate the at least one task-specific parameter (7) further based on third input data (13) that provides information on the first input data (11).

3. The adaptable neural network system (1) of any of claims 1 or 2, wherein the second input data (12) comprises an input query for the adaptable neural network system (1), indicative of a desired task to be performed.

4. The adaptable neural network system (1) of claim 3, wherein the input query comprises a hypothesized property associated with the first input data (11), and the first neural network (4) is adapted to determine a value (15) indicating whether the hypothesized property is correct.

5. The adaptable neural network system (1) of any of claims 1 to 4, wherein the plurality of sequential layers (4a, 4b, 4c) of the first neural network (4) comprises a predetermined number of adjustable parameters, and the second neural network (5) is adapted to generate a task-specific parameter (7) for each of the predetermined number of adjustable parameters.

6. The adaptable neural network system (1) of any of claims 1 to 5, wherein the second neural network (5) comprises a plurality of sequential layers (5a, 5b, 5c), and the at least one task-specific parameter (7) is output by a sequentially last (5c) of the plurality of sequential layers.

7. The adaptable neural network system (1) of any of claims 1 to 6, wherein the first input data (11) comprises clinical information of a subject and the second input data (12) comprises a hypothesized diagnosis or symptom of the subject.

8. The adaptable neural network system (1) of claim 7, wherein the first input data (11) comprises a medical image of the subject.

9. The adaptable neural network system (1) of claim 8, wherein the second neural network (5) is further adapted to generate the at least one task-specific parameter (7) based on metadata (13) associated with the medical image of the subject.

10. A method (40) of processing first input data (11) using an adaptable neural network system (1) comprising a first neural network (4) formed of a plurality of sequential layers, the method comprising:

generating (41), using a second neural network (5), at least one task-specific parameter (7) for the plurality of sequential layers of a first neural network (4) based on second input data (12) indicative of a desired task to be performed on the first input data (11);

modifying (42) the first neural network (4) based on the at least one task-specific parameter (7), to thereby adapt to first neural network to the desired task; and

generating (43) output data (15) by processing the first input data (11) using the modified first neural network (4').

11. The method (40) of claim 10, wherein the step (41) of generating at least one task-specific parameter (7) comprises generating the at least one task-specific parameter further (7) based on third input data (13) that provides information on the first input data.

12. The method (40) of any of claims 10 or 11, wherein the second input data (12) comprises an input query for the adaptable neural network system, indicative of a desired task to be performed.

13. The method (40) of any of claims 10 to 12, wherein the plurality of sequential layers of the first neural network (4) comprises a predetermined number of adjustable parameters, and the at least one task-specific parameter (7) comprises a task-specific parameter for each of the predetermined number of adjustable parameters.

14. The method (40) of any of claims 10 to 13, wherein the second neural network (5) comprises a plurality of sequential layers, and the at least one task-specific parameter (7) is output by a sequentially last of the plurality of sequential layers.

15. A computer program comprising code means for implementing the method of any one of claims 10 to 14 when said program is run on a computer.

FIG. 1

| Image_In | in | (256, 256, 1) |
|---|---|---|
| | out | (256, 256, 1) |

| Conv2D_1 | in | (256, 256, 1) |
|---|---|---|
| | out | (256, 256, 16) |

| Pool_1 | in | (256, 256, 16) |
|---|---|---|
| | out | (128, 128, 16) |

| Conv2D_2 | in | (128, 128, 16) |
|---|---|---|
| | out | (128, 128, 32) |

| Pool_2 | in | (128, 128, 32) |
|---|---|---|
| | out | (64, 64, 32) |

| Conv2D_3 | in | (64, 64, 32) |
|---|---|---|
| | out | (64, 64, 64) |

| AveragePool | in | (64, 64, 64) |
|---|---|---|
| | out | (64) |

| Pred_Out | in | (64) |
|---|---|---|
| | out | (1) |

FIG. 2

| Query_In | in | (14) |
|---|---|---|
| | out | (14) |

| Meta_In | in | (9) |
|---|---|---|
| | out | (9) |

| Dense_1 | in | (14) |
|---|---|---|
| | out | (32) |

| Dense_3 | in | (9) |
|---|---|---|
| | out | (9) |

| Dense_2 | in | (32) |
|---|---|---|
| | out | (32) |

| Dense_4 | in | (9) |
|---|---|---|
| | out | (9) |

| Conc_1 | in | [(32), (16)] |
|---|---|---|
| | out | (48) |

| Dense_5 | in | (48) |
|---|---|---|
| | out | (144) |

| Dense_9 | in | (48) |
|---|---|---|
| | out | (18432) |

| Reshape1 _C1W | in | (144) |
|---|---|---|
| | out | (3, 3, 1, 16) |

| Reshape5 _C3W | in | (18432) |
|---|---|---|
| | out | (3, 3, 32, 64) |

| Dense_6 | in | (48) |
|---|---|---|
| | out | (16) |

| Dense_10 | in | (48) |
|---|---|---|
| | out | (64) |

| Reshape2 _C1B | in | (16) |
|---|---|---|
| | out | (16) |

| Reshape6 _C3B | in | (64) |
|---|---|---|
| | out | (64) |

| Dense_7 | in | (48) |
|---|---|---|
| | out | (4608) |

| Dense_11 | in | (48) |
|---|---|---|
| | out | (64) |

| Reshape3 _C2W | in | (4608) |
|---|---|---|
| | out | (3, 3, 16, 32) |

| Reshape7 _OutW | in | (64) |
|---|---|---|
| | out | (64, 1) |

| Dense_8 | in | (48) |
|---|---|---|
| | out | (32) |

| Dense_12 | in | (48) |
|---|---|---|
| | out | (1) |

| Reshape4 _C2B | in | (32) |
|---|---|---|
| | out | (32) |

| Reshape8 _OutB | in | (1) |
|---|---|---|
| | out | (1) |

FIG. 3

40

12    13

5 → 41

7

4 → 42

4'

11 → 43

15

FIG. 4

Europäisches
Patentamt

European
Patent Office

Office européen
des brevets

# EUROPEAN SEARCH REPORT

Application Number

EP 18 19 1736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/081563 A1 (GOOGLE LLC [US]) 3 May 2018 (2018-05-03) * page 2, line 20 - page 10, line 16 * * figures 1-3 * ----- | 1-15 | INV. G06N3/04 G06N3/08 |
| A | EP 3 361 421 A1 (SIEMENS HEALTHCARE GMBH [DE]) 15 August 2018 (2018-08-15) * paragraph [0012] - paragraph [0047] * * figures 1-7 * ----- | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 12 February 2019 | Simigliani, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 19 1736

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2019

| Patent document cited in search report | | Publication date | Patent family member(s) | | Publication date |
|---|---|---|---|---|---|
| WO 2018081563 | A1 | 03-05-2018 | CN | 108021983 A | 11-05-2018 |
| | | | DE 102017125256 A1 | | 03-05-2018 |
| | | | DE 202017106532 U1 | | 05-02-2018 |
| | | | WO | 2018081563 A1 | 03-05-2018 |
| EP 3361421 | A1 | 15-08-2018 | CN | 108399452 A | 14-08-2018 |
| | | | EP | 3361421 A1 | 15-08-2018 |
| | | | US | 2018225822 A1 | 09-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUANG, G. ; LIU, Z. ; WEINBERGER, K.Q. ; VAN DER MAATEN, L.** Proceedings of the IEEE conference on computer vision and pattern recognition. *Densely connected convolutional networks,* July 2017, vol. 1 (2), 3